# FASCICULE DE BREVET EUROPEEN

(11) **EP 1 915 591 B1**
(45) Date de publication et mention de la délivrance du brevet: **15.02.2012**
(21) Numéro de dépôt: 06794208.6
(22) Date de dépôt: 25.07.2006
(51) Int. Cl.: G01C 23/00

(54) **PROCEDE DE TRAITEMENT DE DONNEES EN VUE DE LA DETERMINATION DE MOTIFS VISUELS DANS UNE SCENE VISUELLE**
VERFAHREN ZUM VERARBEITEN VON DATEN ZUR BESTIMMUNG VISUELLER MUSTER IN EINER VISUELLEN SZENE
METHOD FOR PROCESSING DATA TO DETERMINE VISUAL PATTERNS IN A VISUAL SCENE

(30) Priorité: 25.07.2005 FR 0507895
(43) Date de publication de la demande: 30.04.2008
(73) Titulaire: Airbus, 31700 Blagnac (FR)
(72) Inventeur: STEPHANE, Alexandre-Lucas, F-31000 Toulouse (FR)
(74) Mandataire: Santarelli
(86) Numéro de dépôt international: PCT/FR2006/001808
(87) Numéro de publication internationale: WO 2007/012747

(56) Documents cités:
- DATABASE COMPENDEX [Online] ENGINEERING INFORMATION, INC., NEW YORK, NY, US; GOLDBERG JOSEPH H ET AL: "Computer interface evaluation using eye movements: Methods and constructs" XP002375287 Database accession no. E2001095484018 -& INT J IND ERGON; INTERNATIONAL JOURNAL OF INDUSTRIAL ERGONOMICS OCT 1999 ELSEVIER SCIENCE PUBLISHERS B.V., AMSTERDAM, NETHERLANDS, vol. 24, no. 6, octobre 1999 (1999-10), pages 631-645, XP002375444
- HAYASHI M ED - INSTITUTE OF ELECTRICAL AND ELECTRONICS ENGINEERS: "Hidden Markov models to identify pilot instrument scanning and attention patterns" 2003 IEEE INTERNATIONAL CONFERENCE ON SYSTEMS, MAN AND CYBERNETICS. SMC'03. CONFERENCE PROCEEDINGS. WASHINGTON, DC, OCT. 5 - 8, 2003, IEEE INTERNATIONAL CONFERENCE ON SYSTEMS, MAN, AND CYBERNETICS, NEW YORK, NY : IEEE, US, vol. VOL. 5 OF 5, 5 octobre 2003 (2003-10-05), pages 2889-2896, XP010668058 ISBN: 0-7803-7952-7
- BASSET M ET AL: "Automatic region of interest tracking for visual characterization of the driver's behaviour" INTELLIGENT VEHICLES SYMPOSIUM, 2004 IEEE PARMA, ITALY JUNE 14-17, 2004, PISCATAWAY, NJ, USA,IEEE, 14 juin 2004 (2004-06-14), pages 335-338, XP010727492 ISBN: 0-7803-8310-9
- DATABASE COMPENDEX [Online] ENGINEERING INFORMATION, INC., NEW YORK, NY, US; POPIEUL J-C ET AL: "Automatic processing of a car driver eye scanning movements on a simulated highway driving context" XP002375426 Database accession no. E2001125528296 -& IEEE INTELL VEH SYMP PROC; IEEE INTELLIGENT VEHICLES SYMPOSIUM, PROCEEDINGS 2000 IEEE, PISCATAWAY, NJ, USA, 2000, pages 13-18, XP002375445

## Description

L'invention concerne un procédé et un système de traitement de données représentatives d'une interaction entre un utilisateur et son environnement de travail.

Dans différents secteurs (aéronautique, spatial, automobile, maritime...), l'interaction d'un utilisateur pilotant un véhicule aérien, spatial, terrestre ou maritime, avec son environnement à bord du véhicule est particulièrement étudiée, tant du côté humain que du côté machine, afin d'améliorer, par exemple, l'interface entre le pilote et son environnement de bord (panneaux d'instrumentation...) ou les procédures de pilotage (par exemple, les procédures de vol dans un avion).

Des études sont ainsi menées pour améliorer l'ergonomie de cette interface dans un souci de confort et de sécurité pour l'utilisateur et, par là même, de sécurité pour les passagers transportés.

On cherche, par exemple, à améliorer les éléments d'interface du tableau de bord du véhicule (par exemple, les instruments de pilotage et de navigation dans un avion), afin qu'ils fournissent au pilote davantage d'informations, des informations présentées de façon plus ergonomique, des informations plus fiables, en générant pour ce dernier aussi peu de fatigue et de stress que possible.

On connaît du document intitulé « Computer interface evaluation using eye movements : methods and constructs » de Joseph H. Goldberg, Xerxes P. Kotval, International Journal of Industrial Ergonomics 24 (1999) 631-645, une méthode d'évaluation d'une interface d'ordinateur basée sur les mouvements oculaires.

Plus particulièrement, ce document décrit une méthode de traitement de données représentatives d'une interaction entre un utilisateur et son environnement de travail, qui comprend des étapes :
- d'acquisition de données représentatives de la position au cours du temps du regard de l'utilisateur sur des éléments visuels d'une scène visuelle faisant partie de son environnement de travail, lors de l'interaction entre l'utilisateur et au moins un élément d'interface de l'environnement de travail, l'acquisition de ces données étant effectuée par un appareil occulométrique,
- de traitement des données ainsi acquises.

Le document décrit également un système associé conforme au préambule de la revendication 7.

Dans ce contexte d'étude de l'interaction pilote-environnement de bord du véhicule ou, plus généralement, de l'interaction utilisateur-environnement de travail, il serait utile de disposer d'une nouvelle façon d'étudier cette interaction.

A cet effet, la présente invention vise un procédé conforme à la revendication 1.

On détermine ainsi un ou plusieurs motifs visuels qui se répètent au cours du scénario à partir de données oculométriques recueillies sur un pilote qui est placé en interaction avec au moins un élément d'interface de son environnement de travail (par exemple un avion) dans un scénario d'utilisation de ce dernier.

Les éléments visuels d'une scène visuelle sont, par exemple, les éléments d'interface de l'environnement de travail (par exemple, éléments d'interface du tableau de bord d'un véhicule), des zones de plusieurs de ces éléments et/ou des zones différentes d'un même élément d'interface et/ou des informations visuelles (statiques et/ou dynamiques) fournies par les éléments d'interface.

Pour un pilote d'aéronef, les éléments visuels peuvent également englober le visuel extérieur.

Le ou les motifs visuels déterminés par l'invention fournissent des informations de grande valeur qui peuvent être utilisées, par exemple, pour :
- valider des procédures d'utilisation existantes du véhicule (par exemple, procédures de vol dans un avion) ;
- proposer des modes d'utilisation si des motifs identiques sont déterminés chez la plupart des utilisateurs ;
- évaluer les utilisateurs ;
- découvrir des modes d'utilisation des éléments d'interface, par exemple, des instruments du tableau de bord, et du véhicule, et de la prise d'information sur la scène visuelle extérieure (taxiway, signalisation routière, véhicules en présence, piétons, etc.) ;
- mieux comprendre les résultats obtenus avec d'autres méthodes d'évaluation de l'interaction utilisateur-éléments d'interface et d'environnement du véhicule en général.

On notera que ce traitement qualitatif de données peut être effectué avec pour seule consigne de déterminer tous les motifs visuels quels qu'ils soient, ou alors des motifs visuels particuliers.

Il est également possible d'effectuer le traitement qualitatif pour déterminer un motif visuel ayant un ou plusieurs événements satisfaisant à au moins un critère prédéterminé.

Ainsi, par exemple, on peut rechercher dans un instrument de navigation d'un aéronef des motifs visuels comprenant comme événement la fin de trajectoire future de l'aéronef.

Le traitement statistique permet d'effectuer un tri parmi les données oculométriques acquises et, ainsi, de faciliter le traitement qualitatif de données puisque ce dernier est alors effectué sur des données acquises qui ont été traitées statistiquement (traitement quantitatif).

Le traitement qualitatif occasionne donc un temps de calcul raccourci et un volume calculatoire réduit.

Selon une caractéristique, l'étape de traitement statistique des données acquises fournit le nombre d'occurrences de certains des événements ou éléments visuels regardés par le pilote au cours du temps.

On effectue de cette façon un tri des éléments visuels en fonction de leur importance et/ou de leur intérêt pour le pilote.

Selon une caractéristique, le traitement de données en vue de déterminer au moins un motif visuel est effectué à partir des événements ou éléments visuels dont le nombre d'occurrences est parmi les plus élevés.

Le traitement statistique permet de déterminer les éléments visuels de la scène visuelle les plus regardés par le pilote dans le scénario ou le mode d'utilisation défini pour son environnement de travail, par exemple, son véhicule.

Il est également possible de réaliser le traitement de données à partir d'éléments visuels répondant à un autre critère.

Selon une caractéristique, l'étape d'acquisition de données fournit des données sur le comportement visuel du pilote associé à au moins certains des événements ou éléments visuels regardés par l'utilisateur au cours de l'intervalle de temps.

En prenant en compte le comportement visuel du pilote lors du traitement qualitatif de données, on obtient un motif visuel plus raffiné car porteur d'un plus grand nombre d'informations.

On sait en effet de quelle façon le pilote a regardé tel ou tel élément visuel, c'est-à-dire par fixation, balayage ou poursuite. Il est ainsi possible d'utiliser le comportement visuel du pilote (enregistré par l'appareil oculométrique) comme critère pour déterminer l'importance d'un élément visuel donné par rapport à un autre élément visuel.

Selon une caractéristique, l'étape d'acquisition des données est effectuée pendant un intervalle de temps donné.

Les données sont recueillies sur une période temporelle d'observation durant le déroulement d'un scénario ou d'un mode d'utilisation de l'environnement de travail du pilote, par exemple un avion ou un écran d'ordinateur.

Selon une caractéristique, l'étape d'acquisition des données est effectuée dans le cadre d'un scénario lié au déroulement d'une procédure donnée d'utilisation de l'environnement de travail du pilote (par exemple, mode d'utilisation d'un avion ou d'un écran).

On place ainsi le pilote dans une situation donnée afin d'évaluer son interaction avec un ou plusieurs éléments d'interface de son environnement de travail (ex. tableau de bord du véhicule) suivant une analyse oculométrique.

Par exemple, lorsque l'on modélise le cockpit d'un avion et que les données oculométriques sont recueillies à partir du modèle élaboré, alors la détermination des motifs visuels peur être utilisée pour valider/parfaire le modèle.

L'invention a également pour objet un système conforme à la revendication 7.

Ce système présente les mêmes aspects et avantages que ceux mentionnés ci-dessus à l'égard du procédé et ils ne sont donc pas rappelés ici.

D'autres caractéristiques et avantages apparaîtront au cours de la description qui va suivre, donnée uniquement à titre d'exemple non limitatif et faite en référence aux dessins annexés, sur lesquels :
- la figure 1 représente un algorithme du procédé de traitement de données selon l'invention ;
- la figure 2 est une représentation schématique du système de traitement de données selon l'invention ;
- la figure 3 est une représentation schématique de l'oculomètre 16 représenté à la figure 2 ;
- la figure 4 est un exemple d'écran de visualisation qui va servir de base aux exemples de réalisation des figures précédentes ;
- la figure 5 est un histogramme représentant le nombre d'occurrences en fonction du type d'évènement apparaissant sur l'écran de la figure 4 ;
- la figure 6 illustre de façon schématique la détection de motifs visuels ;
- la figure 7 illustre la représentation schématique sur l'écran de la figure 4 d'un motif visuel détecté sur la figure 6 ;
- la figure 8 illustre de façon schématique la détection de motifs visuels (sans comportements visuels) ;
- la figure 9 illustre la représentation schématique sur l'écran de la figure 4 d'un motif visuel détecté sur la figure 8 ;
- la figure 10 illustre de façon schématique la détection de motifs visuels avec les comportements visuels associés ;
- la figure 11 illustre la représentation schématique sur l'écran de la figure 4 d'un motif visuel détecté sur la figure 10.

L'invention trouve une application particulièrement intéressante dans les cockpits d'aéronefs en évaluant les interactions visuelles entre le pilote (utilisateur) et un ou plusieurs des instruments de bord (environnement de travail) par l'acquisition et traitement de données oculométriques.

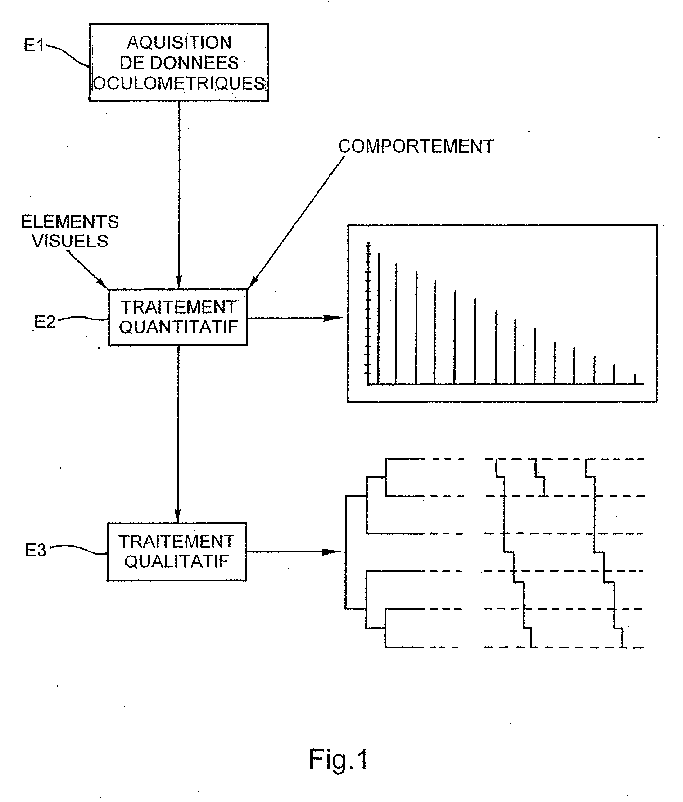

Un algorithme général du procédé selon l'invention est représenté à la **figure 1** en trois principales étapes.

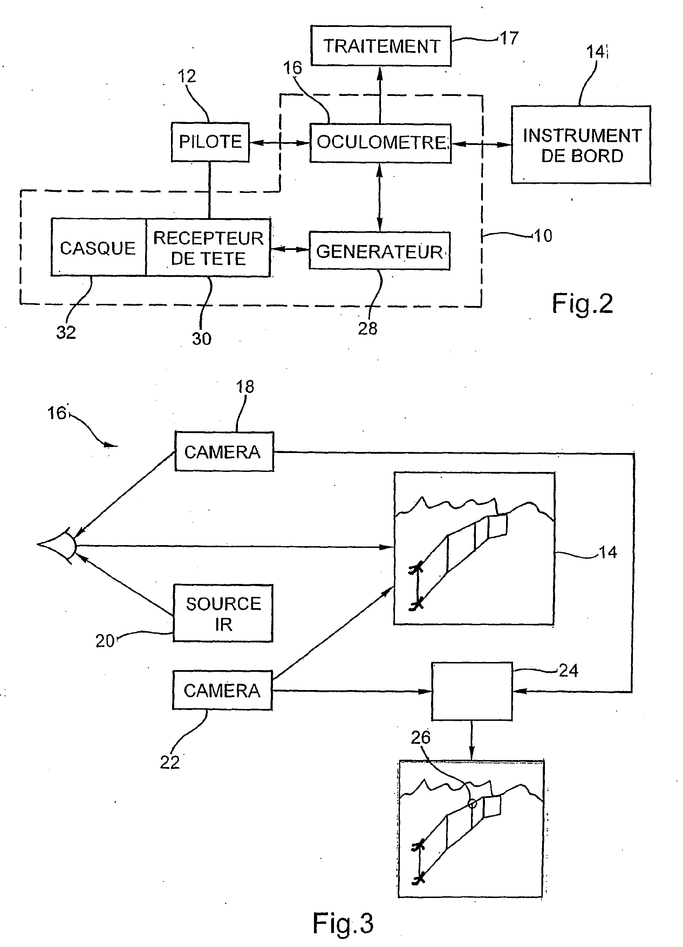

Au cours d'une première étape E1, on procède à une acquisition de données oculométriques par un appareil oculométrique qui sera détaillée ultérieurement en référence aux figures 2 et 3.

Ces données traduisent la position au cours du temps du regard (parcours visuel) du pilote sur des éléments visuels d'une scène visuelle faisant partie de l'environnement de travail du pilote, lors de l'interaction du pilote avec un ou plusieurs éléments d'interface d'un cockpit d'avion.

Plus particulièrement, l'acquisition de ces données va permettre de suivre le regard du pilote qui parcourt un ou plusieurs instruments de bord du cockpit et d'identifier les éléments visuels ayant retenu l'attention du pilote. On détaillera ultérieurement un exemple dans lequel les données oculométriques sont représentatives de la position du regard du pilote parcourant différents éléments visuels d'un même instrument de bord.

L'algorithme de la figure 1 comporte une deuxième étape E2 au cours de laquelle on procède au traitement quantitatif des données oculométriques préalablement acquises.

Cette étape qui peut parfois être omise permet d'effectuer un traitement statistique des données oculométriques en fournissant, par exemple, sous forme d'histogrammes, le nombre d'occurrences de certains des éléments visuels, voire de tous les éléments visuels, regardés par le pilote au cours du temps.

Ainsi, par exemple, ce traitement statistique permet de déterminer que le pilote a regardé la trajectoire de l'avion dans l'air 56 fois et la projection de cette trajectoire au sol 15 fois.

Ce traitement est, par exemple, effectué par un logiciel de tri statistique appelé "*The Observer*" distribué par la société Noldus Information Technology BV, Wageningen, Pays Bas.

Pour de plus amples informations concernant ce logiciel, on pourra se reporter au site web www.noldus.com.

On fournit en entrée de ce logiciel les données oculométriques enregistrées ainsi que le protocole expérimental, à savoir les éléments visuels de la scène visuelle regardée par le pilote et les comportements visuels de ce dernier qui se traduisent, par exemple, par des fixations, des balayages ou des poursuites.

On notera toutefois que la prise en compte du comportement visuel du pilote n'est pas toujours nécessaire dans le traitement des données qui va suivre.

On notera que, lors de l'étape E2, les éléments visuels et les comportements fournis au module de traitement quantitatif peuvent également provenir d'un modèle cognitif établi à partir du cockpit de l'avion.

L'algorithme de la figure 1 comporte ensuite une troisième étape E3 de traitement qualitatif des données, soit des données oculométriques acquises sans le traitement quantitatif de l'étape E2, soit des données oculométriques acquises et traitées quantitativement au cours de l'étape E2.

Le traitement qualitatif de données permet de déterminer, selon le ou les critères prédéterminés que l'on choisit, un ou plusieurs motifs visuels constitués d'une séquence d'éléments visuels de la scène visuelle, motifs qui se répètent à l'identique plusieurs fois au cours d'un intervalle de temps donné (période d'observation).

Il est ainsi possible, lorsque l'on n'effectue pas de traitement quantitatif préalable, de chercher à obtenir tous les motifs visuels se produisant durant l'intervalle de temps donné, sans tenir compte de critères particuliers.

Il est toutefois possible de déterminer le ou les motifs visuels contenant un ou plusieurs éléments visuels donnés afin, par exemple, d'évaluer l'utilité d'une information fournie au pilote sur un instrument en cours de conception.

Lorsque l'on tient compte du résultat de l'étape de traitement statistique E2, il est également possible de déterminer un ou plusieurs motifs visuels contenant des éléments visuels donnés, par exemple, un élément visuel relatif à la projection de la trajectoire de l'avion au sol.

On peut également rechercher des motifs visuels contenant des éléments visuels ayant une signification statistique.

Ainsi, par exemple, on peut rechercher les motifs visuels contenant l'élément visuel apparaissant le plus grand nombre de fois au cours du temps (plus grand nombre d'occurrences) ou les deux ou trois premiers éléments visuels répondant à cette définition.

On peut également choisir de rechercher des motifs visuels contenant des éléments visuels ayant une autre signification statistique comme, par exemple, ceux qui sont le moins souvent regardés par le pilote.

Le traitement qualitatif de l'étape E3 peut être mis en oeuvre par un logiciel dénommé "*Theme*" distribué par la société Noldus mentionée ci-dessus.

Ce logiciel s'appuie notamment sur un algorithme de recherche d'une séquence d'évènements en commençant par rechercher, dans un intervalle de temps donné, un premier évènement en particulier.

Ce logiciel prévoit ensuite de rechercher l'apparition, au cours de cet intervalle de temps, d'un deuxième évènement succédant au premier évènement et se produisant dans un temps donné après l'apparition du premier évènement

(on définit ainsi un deuxième intervalle de temps inférieur au premier intervalle de temps).

Dès lors que l'on a identifié un couple de premier et second évènements se produisant à l'intérieur du second intervalle de temps, on procède alors de même en recherchant l'apparition d'un troisième évènement au cours du premier intervalle de temps et qui apparaît également après le deuxième évènement dans un temps donné (troisième intervalle de temps) après l'apparition du deuxième évènement.

On procède ainsi de façon répétée pour identifier les séquences d'évènements.

Pour de plus amples informations, le lecteur pourra se reporter à l'article intitulé "Discovering hidden time patterns in behavior: T-patterns and their detection" de Magnus S. Magnusson, Behavior Research Methods, Instruments & Computers 2000, 32(I), 93-I I0, pp. 93-110.

De façon préférée, on effectue le traitement qualitatif de l'étape E2 en plusieurs sous-étapes :
1. recherche des motifs visuels contenant un élément visuel N issu du traitement statistique (N=1, 2, 3...) ; cette recherche est faite sur un seul élément à la fois ;
2. lorsque l'on obtient ces motifs, on effectue le traitement qualitatif suivant :
   a) prise en compte des données relatives aux comportements visuels (enrichissement de la base de données),
   b) parmi les motifs visuels identifiés à la première étape et comprenant l'élément N, on tient compte du comportement visuel pour rechercher seulement les motifs pertinents composés des éléments N, M et R, les autres motifs étant par exemple considérés comme peu significatifs.

Les différentes étapes de l'algorithme de la figure 1 sont mises en oeuvre par des moyens de traitement de données (unité centrale) en relation avec les moyens d'acquisition des données et de stockage de ces données (base de données, mémoire...).

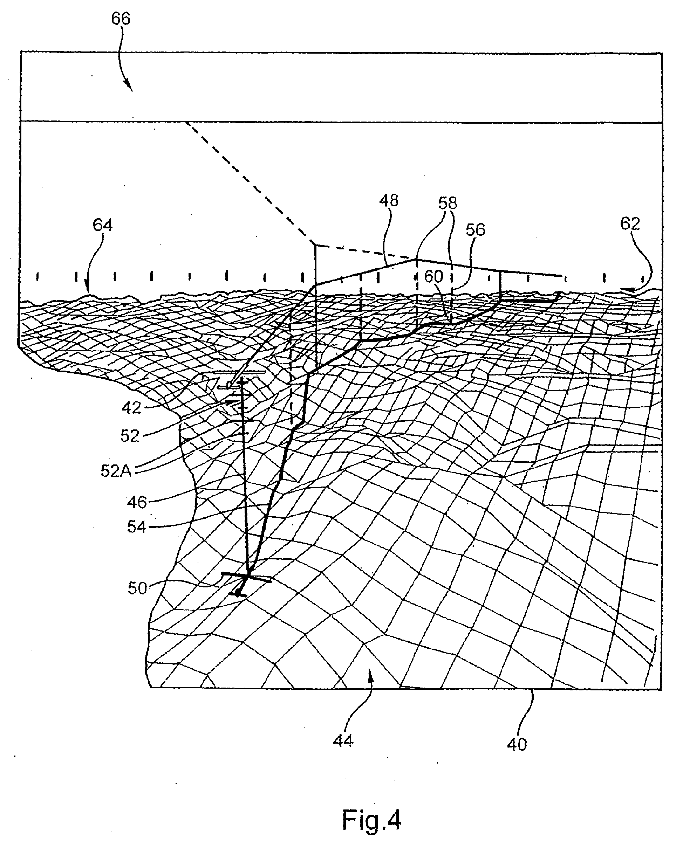

Comme représenté aux **figures 2 et 3**, l'appareil oculométrique 10 permet d'enregistrer la position du regard du pilote 12 sur une scène visuelle, permettant ainsi de suivre les différents éléments visuels parcourus par le regard du pilote sur les éléments d'interface du cockpit, tels qu'un instrument de bord 14, ainsi que sur le visuel externe. Cet instrument sera décrit ultérieurement en référence à la figure 4.

L'appareil oculométrique 10 comporte un dispositif analogique 16, à savoir l'oculomètre, qui enregistre les mouvements de l'oeil du pilote et fournit les données oculométriques aux moyens de traitement 17 mentionnés ci-dessus en référence à la description de la figure 1.

L'oculomètre comporte plusieurs organes représentés sur la figure 3, à savoir, une caméra 18 enregistrant les mouvements de l'oeil, une source infrarouge 20 émettant un rayon infrarouge dans l'oeil et une caméra 22 enregistrant la scène visuelle vue par le pilote.

Ainsi, les données vidéo acquises par la caméra 18 enregistrant les mouvements de l'oeil et les données vidéo acquises par la caméra 22 enregistrant la scène visuelle vue par le pilote sont superposées par une unité de traitement de données vidéo 24 et la position du regard du pilote en temps réel est représentée par un pointeur 26 (par exemple, un cercle ou un réticule) qui se déplace sur la scène visuelle que le pilote regarde au moment où l'enregistrement est réalisé.

L'utilisation de l'oculomètre seul, bien que suffisante pour le visuel externe, n'apporte pas suffisamment de précisions si l'on veut enregistrer des détails particulièrement fins du parcours visuel du pilote, par exemple, la lecture de textes ou la prise d'informations sur des zones spécifiques d'un écran tel que celui de l'instrument 14.

Ainsi, on associe à l'oculomètre un générateur de champ magnétique 28 pour apporter une précision maximum (figure 2).

Le générateur de champ magnétique 28 est utilisé comme référentiel dans l'espace à trois dimensions pour capter la position de la tête du pilote par rapport aux coordonnées des différentes surfaces et plans qui composent l'environnement réel de celui-ci. A cet égard, les surfaces et plans concernés sont ceux correspondant aux écrans et aux panneaux de commande du cockpit constituant des régions d'intérêt qui peuvent être décomposées elles-mêmes en zones et sous-zones d'intérêt comme on l'a vu précédemment pour chaque élément d'interface. Les coordonnées correspondant à ces différentes surfaces et plans sont mesurées et enregistrées dans le modèle 3D de l'environnement du pilote.

Pour analyser les mouvements de la tête du pilote 12, on fait donc appel à un générateur de champ magnétique 28 ainsi qu'à un récepteur 30 fixé à la tête du pilote par l'intermédiaire d'un casque 32 et ces éléments combinés au dispositif analogique précité 16 (oculomètre) permettent d'obtenir une précision maximale de la position du regard de l'utilisateur sur les éléments visuels d'une scène visuelle telle que celle apparaissant sur l'instrument de bord 14.

Plus particulièrement, le récepteur 30 fixé à la tête du pilote fournit la position exacte de la tête dans le modèle en trois dimensions.

La distance entre ce récepteur de tête 30 et la caméra 22 enregistrant la scène, ainsi que la distance entre le récepteur de tête 30 et les yeux du pilote 12 sont ensuite introduites dans le modèle en trois dimensions. La première des distances précitées est nécessaire pour effectuer la calibration de la caméra par rapport à la scène et la seconde de ces distances est nécessaire pour calibrer le dispositif analogique (oculomètre).

On notera que l'adaptation de l'appareil oculométrique précité 10 (figure 2) au cockpit en vue d'apporter un maximum de précision par combinaison des données fournies par la position de la tête du pilote et de celles fournies par la position de son regard tient compte de l'étude géométrique du cockpit et de l'étude de la posture du pilote 12.

En effectuant l'étude géométrique du cockpit, la Demanderesse s'est aperçue que pour implanter le générateur de champ magnétique 28 sur un support dans le cockpit, il convenait de s'assurer que la distance entre le générateur 28 et toute surface métallique soit suffisamment grande pour réduire au minimum les interférences magnétiques pouvant se produire avec l'appareil oculométrique.

Par ailleurs, lors de la configuration des différents organes constituant l'appareil oculométrique 10 au sein du cockpit, la Demanderesse a constaté que la distance entre le générateur de champ magnétique 28 et le récepteur 30 de la position de la tête du pilote devait être strictement inférieure à la distance entre le récepteur 30 de la position de la tête du pilote et toute surface métallique, là encore pour réduire le plus possible les interférences magnétiques.

Il convient de noter que l'étude posturale du pilote 12 permet de définir les limites de son volume de mouvement et donc les distances entre le récepteur de tête et la source de champ magnétique.

Grâce à l'appareil oculométrique 10, il est possible d'enregistrer de manière très précise les mouvements oculaires (comportements visuels du pilote) tels que les fixations, balayages et poursuites qui caractérisent la façon dont le pilote regarde les éléments spécifiques d'une scène visuelle aéronautique (instruments de bord et visuel extérieur) telle que celle se déroulant sur l'instrument 14.

Les éléments constitutifs de l'appareil oculométrique 10, à savoir le dispositif analogique 16, le générateur de champ magnétique 28 et un casque 32 portant le récepteur de tête 30, sont disponibles auprès de la société SensoMotoric Instruments GmbH, Warthestrasse 21, D-14513 Teltow, Allemagne.

Pour plus d'informations, le lecteur pourra consulter le site web www.smi.de.

L'instrument de bord 14 représenté sur les figures 2 et 3 se présente sous la forme d'un écran de visualisation représenté de façon plus détaillée sur la **figure 4****.**

L'écran 40 de la figure 4 représente une image de synthèse en trois dimensions pour visualiser la position de l'aéronef, ainsi que l'environnement dans lequel évolue cet aéronef.

Cette image de synthèse est élaborée selon un point de vue extérieur à l'aéronef et l'affichage de cette image de synthèse sur l'écran de visualisation 40 situé dans le cockpit de l'aéronef permet d'améliorer la conscience qu'a le pilote de la situation effective de cet aéronef.

Cet écran de visualisation peut être un écran spécifique ou un écran existant déjà sur l'aéronef, comme par exemple un écran de navigation de l'instrument de bord ND ("*Navigation Display*" en terminologie anglosaxonne).

Dans cette image de synthèse, plusieurs éléments figuratifs ou symboles sont utilisés : un symbole 42 représentant l'aéronef (symbole d'avion) et indiquant l'emplacement de ce dernier, une représentation 44 illustrant le terrain au-dessus duquel évolue l'aéronef, un trait vertical de référence 46 entre le symbole 42 de l'aéronef et sa projection verticale sur le terrain 44 et un tracé 48 représentant la trajectoire future de l'aéronef.

Le symbole 42 est fixe dans l'image en trois dimensions et fournit au pilote une référence permanente et immédiate lorsque le regard du pilote se pose sur l'écran de visualisation 40.

Le terrain 44 est mobile et déroule ainsi le relief autour de la maquette de l'aéronef.

Le symbole 42 est représentatif des attitudes réelles de l'aéronef en roulis, tangage et lacets. Ces informations sont qualitativement reportées sur ce symbole qui s'incline suivant les trois axes.

L'image de synthèse en trois dimensions comporte également un symbole 50 représenté à l'intersection du trait vertical 46 et du terrain 44 afin de permettre une visualisation de la projection verticale de l'aéronef sur le terrain (projection au sol du symbole de l'avion).

On notera en outre que le trait vertical 46 comporte une échelle 52 ((échelle de perroquet) constituée de repères horizontaux 52A placés sur ce trait vertical de façon à indiquer des distances prédéterminées sous l'aéronef.

On trouve également comme information sur l'écran 40 un tracé 54 représentant la projection verticale sur le terrain 44 de la trajectoire future 48 de l'aéronef (trajectoire projetée au sol), une pluralité de traits verticaux 56 (traits verticaux de support de trajectoire) entre des points 58 situés sur le tracé 48 représentant la trajectoire future de l'aéronef et les projections verticales 60 correspondantes de ces points sur le terrain.

Par exemple, les points 58 correspondent à la position prévue de l'aéronef à différents intervalles de temps ou de distance.

On notera que l'image de synthèse comporte également une échelle de cap 62 représentée au-dessus de la ligne d'horizon 64.

Par ailleurs, l'image de synthèse comporte des informations complémentaires, qui sont par exemple affichées sur un bandeau d'affichage 66 prévu sur l'écran de visualisation au-dessus de la représentation en trois dimensions. Ces informations complémentaires peuvent notamment correspondre au report d'informations habituellement affichées sur un écran d'affichage de navigation ND telles que le vent (direction et force), la vitesse de l'aéronef, le prochain point de route, ...

Pour plus de détails concernant l'image de synthèse représentée à la figure 4, le lecteur pourra se reporter à la demande de brevet européen EP 1 460 384.

On va maintenant illustrer à l'aide d'exemples les étapes E2 et E3 de l'algorithme de la figure 1 concernant respectivement le traitement quantitatif et le traitement qualitatif de données recueillies par l'appareil oculométrique représenté sur les figures 2 et 3, pour un pilote regardant un scénario qui se déroule sur l'instrument de bord représenté à la figure 4.

Selon le scénario envisagé, le pilote est placé dans le contexte d'un scénario lié au déroulement d'une procédure de vol correspondant à une phase d'approche en région montagneuse.

Le pilote regarde le scénario se dérouler sous ses yeux sur l'image de synthèse du type de celle représentée à la figure 4 et l'appareil oculométrique enregistre le mouvement des yeux du pilote sur l'image de synthèse, pendant un intervalle de temps donné correspondant au temps de déroulement du scénario.

Cet intervalle de temps a une durée, par exemple, égale à 15 minutes.

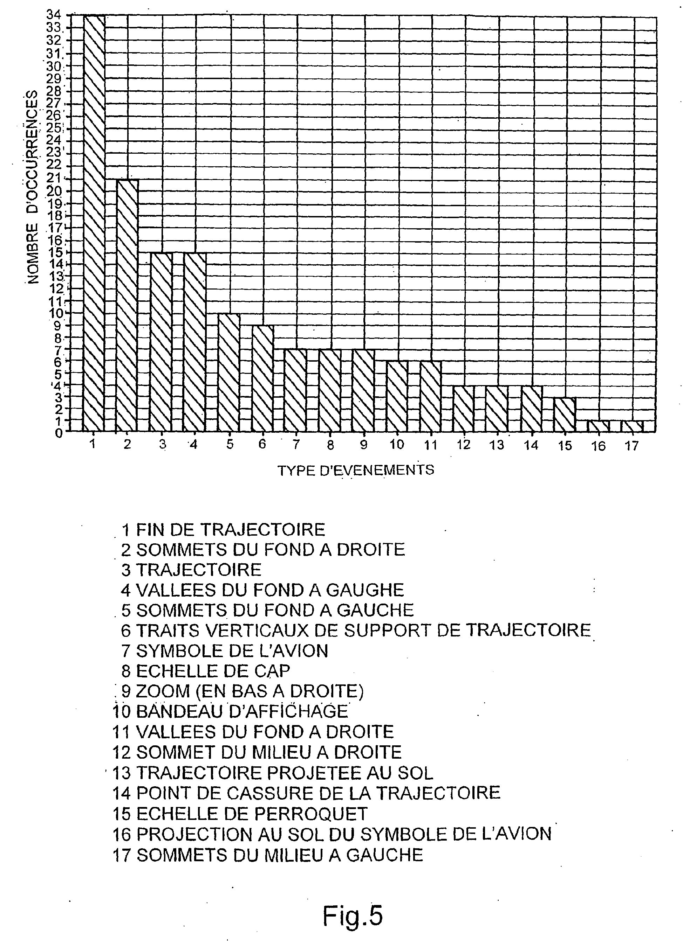

En fournissant au logiciel de traitement quantitatif de données (étape E2 de la figure 1) le scénario envisagé, ainsi que les différents éléments visuels ou évènements apparaissait sur l'image de synthèse de l'instrument de bord considéré, il est possible d'effectuer une analyse statistique des données oculométriques acquises par l'appareil oculométrique 10 et les résultats de cette analyse statistique sont illustrés sur la figure 5 sous la forme d'un histogramme représentant le nombre d'occurrences ou d'apparitions de chacun des 17 évènements indiqués.

Chacun de ces évènements correspond à un élément visuel de la scène visuelle qui s'est déroulée sous les yeux du pilote et sur lequel ce dernier a porté son regard.

Ce traitement fait apparaître les éléments statistiques les plus significatifs et ceux les moins significatifs et, en particulier, montre que l'élément le plus regardé par le pilote, c'est-à-dire l'élément considéré par ce dernier comme étant le plus important lors du déroulement de la scène visuelle, est la fin de trajectoire puisqu'il apparaît 34 fois au cours de l'intervalle de temps d'observation.

L'élément visuel correspondant aux sommets du fond à droite est l'évènement venant en seconde position par ordre d'importance pour le pilote puisqu'il apparaît 21 fois au cours de la période d'observation.

L'importance accordée à ces deux premiers éléments s'explique par le fait que, dans le scénario considéré, l'avion est supposé atterrir dans une région montagneuse située, sur l'image de synthèse, au fond à droite par rapport à la trajectoire de l'avion représentée.

On constate également en fonction des résultats de ce traitement statistique que les éléments visuels ou évènements portant les numéros 16 et 17 arrivent en dernière position avec le même nombre d'occurrences et concernent respectivement la projection au sol du symbole de l'avion et les sommets du milieu à gauche.

Après avoir effectué une analyse statistique des éléments visuels de la scène visuelle sur laquelle le pilote a posé les yeux, on passe à l'étape E3 de la figure 1 pour effectuer un traitement qualitatif des données préalablement traitées de façon statistique.

On a ainsi recherché les séquences structurées d'éléments visuels de la scène visuelle qui se répètent de façon identique au moins une fois durant l'intervalle de temps d'observation (motifs visuels).

Dans la mesure où l'on dispose d'informations statistiques et, plus particulièrement, d'informations sur l'importance accordée aux évènements par le pilote, il est possible d'effectuer une recherche de ces séquences ou successions structurées d'éléments visuels (motifs visuels) à partir de l'importance détectée pour certains éléments visuels.

Il est également possible de rechercher un ou plusieurs motifs visuels faisant intervenir des éléments visuels satisfaisant à un autre critère que l'importance de l'élément visuel considéré, par exemple, la pertinence des couleurs dans la prise d'informations.

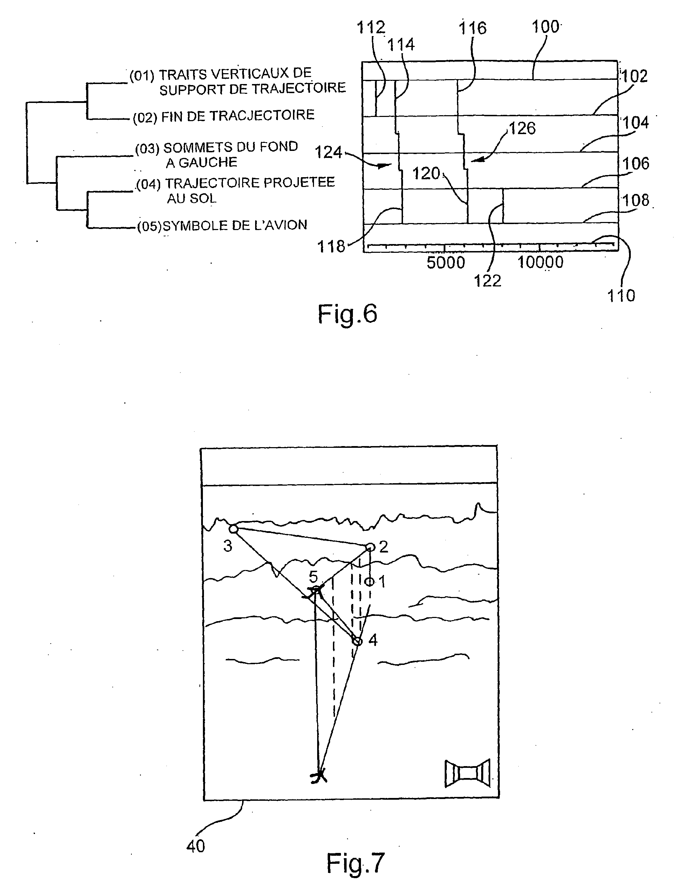

Lors du traitement qualitatif de données dont les résultats sont.illustrés sur les figures 6 et 7, il n'a pas été tenu compte du comportement visuel du pilote et les motifs visuels déterminés sont ainsi considérés comme des motifs simples.

Ainsi, sur la **figure 6**, on a représenté les différents éléments visuels ou évènements qui devaient se trouver dans le ou les motifs visuels recherchés.

Il s'agit des éléments suivants :
- traits verticaux de support de trajectoire,
- fin de trajectoire,
- sommets du fond à gauche,
- trajectoire projetée au sol,
- symbole de l'avion.

Les éléments appariés correspondent aux sous-motifs trouvés par le logiciel de traitement qualitatif mentionné plus haut.

On notera que l'on a d'abord recherché avec le logiciel de traitement qualitatif les éléments visuels contenant la fin de trajectoire. Ensuite, le traitement a permis de détecter, au cours de la période d'observation, l'apparition successive de l'évènement relatif aux traits verticaux de support de trajectoire et celui relatif à la fin de trajectoire avec, comme contrainte supplémentaire, la survenance de l'évènement relatif à la fin de trajectoire dans un intervalle de temps donné suffisamment petit par rapport à la survenance de l'évènement relatif aux traits verticaux de support de trajectoire.

Sur la partie droite de la figure 6, on a représenté sur des lignes parallèles 100, 102, 104, 106, 108 disposées les unes au-dessus des autres, par des points, l'apparition des évènements considérés en regard de chaque ligne par rapport à une échelle de temps 110 exprimée en dixièmes de seconde par des points.

Ainsi, le traitement qualitatif de données fait apparaître un même motif visuel qui se répète à l'identique trois fois, identifié par les références 112, 114, 116, dans lequel le premier évènement relatif aux traits verticaux de support de trajectoire est directement suivi du deuxième évènement relatif à la fin de trajectoire.

De même, le traitement qualitatif de données procède de façon identique avec les deux évènements portant les numéros 4 et 5 relatifs respectivement à la trajectoire projetée au sol et au symbole de l'avion et permet d'identifier, au cours de la période d'observation considérée, un même motif visuel qui se répète trois fois, identifié par les références 118, 120, 122, dans lequel apparaissent successivement la trajectoire projetée au sol et le symbole de l'avion.

En ajoutant le dernier évènement relatif aux sommets au fond à gauche qui doit apparaître en tant que troisième élément, après successivement les traits verticaux de support de trajectoire et la fin de trajectoire (1 et 2) et avant les événements successifs relatifs à la trajectoire projetée au sol et au symbole de l'avion (4 et 5), le traitement qualitatif de données permet de déterminer le motif visuel qui se répète de façon identique deux fois, identifié par les références 124 et 126. Ce motif correspond à une séquence ou succession structurée d'éléments visuels que le pilote a regardés deux fois au cours de la période d'observation donnée.

On a représenté sur la **figure 7** l'écran d'affichage du type de celui illustré à la figure 4 et qui représente l'image de synthèse de l'avion lors du déroulement du scénario que le pilote a regardé.

L'image de synthèse représentée sur l'écran 40 de la figure 7 fait apparaître le motif visuel 124 de la figure 6 qui se produit de façon très rapide dans le temps, comme on peut en juger d'après l'échelle de temps 110 de la figure 6.

Ainsi, le premier évènement ou élément visuel regardé par le pilote dans ce motif est l'élément n° 1 représentant les traits verticaux de support de trajectoire situés au fond de l'écran.

Le deuxième élément regardé est celui de la fin de trajectoire de l'avion, le troisième correspond aux sommets du fond à gauche, puis le regard du pilote se porte sur la trajectoire projetée au sol (élément 4) pour revenir finalement au symbole de l'avion (élément 5).

Le motif visuel ainsi déterminé est de longueur 5 puisqu'il implique cinq éléments visuels de la scène, tandis que le niveau de ce motif visuel, à savoir le nombre de niveaux hiérarchiques, est de 3.

Le niveau hiérarchique d'un motif visuel correspond au nombre d'imbrications de sous-motifs présents dans ce motif et qui sont représentés comme suit :
Niveau 1 : (a,b)
Niveau 2 : (a (b,c))
Niveau 3 : (a (b (c,d))),
où (x, y) désigne un motif de niveau 1.

On notera que les éléments visuels 1 et 2 forment un sous-motif visuel de niveau 1, de même que les éléments 4 et 5, et que le sous-motif visuel constitué des deux éléments 4 et 5 combiné à l'élément visuel 3 forme un motif visuel de niveau 2.

La détermination d'un tel motif visuel permet, par exemple, d'identifier des aspects importants qui doivent être pris en considération lors de la formation des futurs pilotes.

Il convient de noter que dans l'exemple de réalisation fourni ci-dessus, on a suivi le parcours visuel du pilote sur un même écran de visualisation, mais on peut également procéder de façon similaire en présentant au pilote un scénario nécessitant qu'il regarde deux ou plus de deux afficheurs/instruments de bord.

Il est ainsi possible, après avoir constaté que le regard du pilote effectue des aller-retour incessants d'un afficheur à l'autre, d'envisager la conception d'un nouvel afficheur réunissant les éléments visuels ou évènements regardés par le pilote au cours de ces aller-retour visuels successifs.

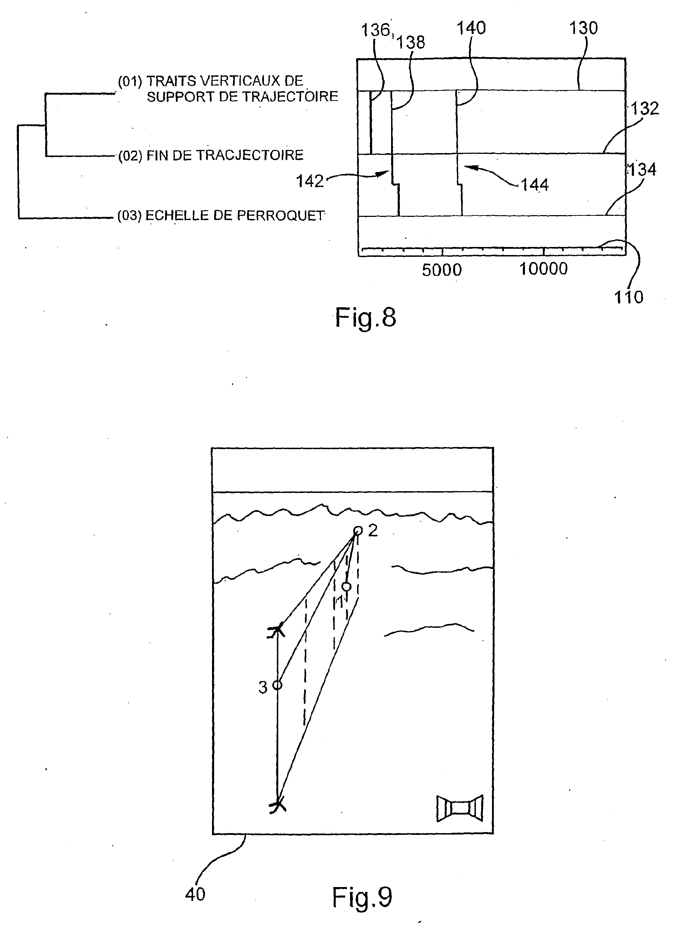

On va maintenant décrire un autre exemple de réalisation montrant de façon comparative les résultats obtenus sans tenir compte du comportement visuel du pilote et en tenant compte du comportement visuel de ce dernier en référence aux figures 8 à 11.

Dans cet exemple, on a considéré le motif visuel suivant :
- traits verticaux de support de trajectoire,
- fin de trajectoire,
- échelle de perroquet.

Le motif visuel contenant ces éléments visuels a été trouvé par le logiciel de traitement qualitatif lors de la recherche de motifs contenant l'élément fin de la trajectoire, sélectionnés à partir des résultats du traitement statistique préalable.

De façon identique à ce qui a été décrit en référence à la figure 6, une ligne temporelle a été représentée en regard de chacun des éléments visuels ou évènements et on a représenté, en fonction de l'échelle de temps 110, l'apparition de chacun de ces évènements sur la ligne correspondante 130, 132, 134.

Le traitement qualitatif de données a été d'abord appliqué aux données faisant intervenir les deux évènements relatifs aux traits verticaux de support de trajectoire et à la fin de trajectoire, afin de rechercher des motifs visuels comprenant ces deux éléments successifs.

Le traitement qualitatif de données a ainsi permis de déterminer les trois occurrences 136, 138 et 140 du même motif visuel, indiquées sur la **figure 8**.

Dans le traitement qualitatif de données, on a ensuite ajouté l'évènement échelle de perroquet, ce qui a permis d'identifier les deux occurrences 142 et 144 du même motif visuel, constituées chacune de la succession temporelle des évènements ou éléments visuels suivants :
- traits verticaux de support de trajectoire,
- fin de trajectoire, et
- échelle de perroquet.

Il a ensuite été représenté sur l'écran de visualisation 40 de la **figure 9** le motif visuel 142 qui relie les éléments visuels choisis successifs regardés par le pilote au cours de l'intervalle de temps d'observation.

Le motif visuel 142 se reproduit à l'identique et de façon décalée dans le temps en 144.

On constate que le motif visuel déterminé est de longueur 3 et de niveau 2, avec un sous-motif visuel de niveau 1 (motif visuel 136) qui apparaît une fois de façon indépendante (en dehors du motif 142).

Dans cette première étape d'analyse qualitative, on n'a pas tenu compte, lors du traitement, des données oculométriques correspondant au comportement visuel du pilote, ce qui a permis de trouver les motifs visuels simples décrits ci-dessus.

Dans une deuxième étape, on rajoute les données qui correspondent au comportement visuel du pilote (pouvant correspondre, par exemple, à un balayage du regard, à une fixation longue ou à une fixation courte) et l'on recherche des motifs visuels qui contiennent les éléments visuels des motifs visuels trouvés précédemment.

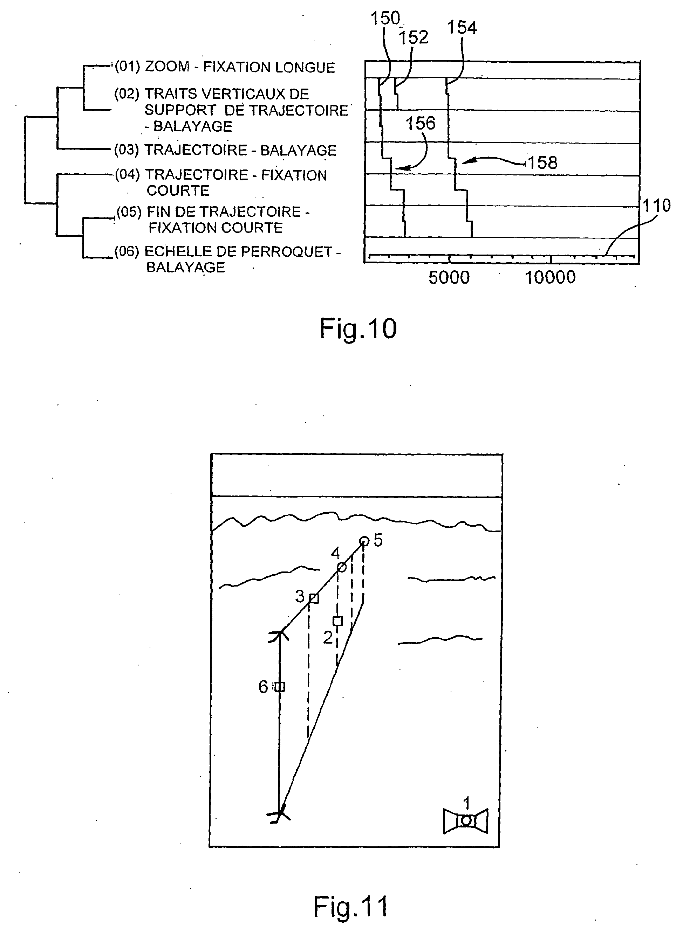

Sur la **figure 10**, on a reproduit les résultats d'un traitement qualitatif appliqué aux données que sont les évènements relatifs aux éléments d'un motif trouvé préalablement. Ces éléments sont les traits verticaux de support de trajectoire, la fin de trajectoire et l'échelle de perroquet.

En détectant des motifs visuels comprenant les éléments visuels précités et en tenant compte du comportement visuel du pilote, un plus grand nombre d'informations ont été obtenues, comme en témoigne la partie gauche de la figure 10 qui identifie les éléments visuels ou événements suivants affectés chacun du comportement visuel concerné :
- zoom-fixation longue,
- traits verticaux de support de trajectoire-balayage,
- trajectoire-balayage,
- trajectoire-fixation courte,
- fin de trajectoire-fixation courte,
- échelle de perroquet-balayage.

La base de données étant enrichie avec les données représentatives du comportement visuel du pilote, le traitement qualitatif permet de déterminer des motifs plus complexes, insérant dans le motif des couples élément-comportement, comme par exemple le couple trajectoire-balayage.

En procédant de façon identique à ce qui a été décrit en référence aux figures précédentes, le logiciel de traitement qualitatif de données a recherché les motifs visuels comprenant les deux premiers éléments visuels, à savoir le zoom-fixation longue et les traits verticaux de support de trajectoire-balayage, pour identifier le même motif visuel 150, 152 et 154 et pour arriver finalement à la détermination de deux occurrences 156 et 158 correspondant à un même motif se reproduisant à l'identique au cours du temps.

Le motif visuel complexe ainsi déterminé relie de façon structurée les six éléments visuels ou évènements représentés sur la figure 10.

Le motif visuel 156 est illustré sur la **figure 11** uniquement sous la forme des chiffres représentant chacun un élément visuel afin de ne pas surcharger le schéma.

Les ronds indiquent les fixations, tandis que les carrés indiquent les balayages.

Le motif visuel ainsi déterminé est de longueur 6, de niveau 3, et se reproduit entièrement deux fois dans le temps (motifs 156 et 158 de la figure 10).

Le sous-motif visuel 152 identifié à l'intérieur du motif visuel complexe se reproduit, quant à lui, trois fois (150, 152, 154).

En ajoutant les données visuelles relatives au comportement visuel du pilote, on obtient ainsi des motifs visuels plus riches en informations. Le comportement visuel du pilote permet d'ailleurs de déterminer l'intérêt (fixation longue) ou l'absence d'intérêt de tel ou tel élément visuel.

On peut déduire des différents motifs visuels déterminés dans les exemples de réalisation illustrés aux figures 6 à 11 des améliorations possibles aux éléments d'interface pilote-cockpit, aux procédures d'utilisation de ces éléments d'interface (par exemple, procédure de vol...), ou l'on peut s'en servir pour apprendre aux pilotes à se former aux éléments d'interface du cockpit.

A titre d'exemple, en déterminant un ou plusieurs motifs visuels caractérisant l'utilisation d'un instrument par le pilote, l'invention permet de déterminer à quel moment un système d'affichage placé en hauteur, au-dessus de la tête du pilote ("*Head Up Display*" en terminologie anglosaxonne) devrait être utilisé pour en optimiser l'utilisation. L'invention permet également de déterminer si un tel système d'affichage est réellement utilisé par le pilote sur un type de véhicule particulier.

Dans un autre exemple, l'invention permet de se rendre compte que le pilote construit mentalement une représentation visuelle en trois dimensions de la position de son véhicule dans l'espace, et ce, uniquement sur la base d'informations en deux dimensions fournies par des instruments de bord.

L'invention peut alors servir de base pour concevoir un nouvel instrument fournissant une représentation visuelle en trois dimensions de la position du véhicule dans l'espace.

L'invention est particulièrement avantageuse pour déterminer les informations réellement utiles qui sont fournies par des éléments d'interface du tableau de bord.

En effet, grâce à l'acquisition et au traitement qualitatif de données oculométriques, l'invention permet de séparer les informations indispensables à l'utilisateur de celles qui ne sont pas particulièrement utiles ou alors qui sont redondantes.

Par ailleurs, l'invention s'applique à d'autres couples utilisateur-environnement de travail, tels qu'un conducteur de véhicule automobile, de train ou de bateau en interaction avec un tableau de bord, ou bien encore un utilisateur d'un logiciel informatique en interaction avec un ordinateur (écran, clavier...) permettant son exécution, voire un utilisateur utilisant son téléphone portable...

L'invention permet ainsi, en déterminant des motifs visuels reflétant l'utilisation par l'utilisateur d'élément(s) d'interface du véhicule, de l'ordinateur, du téléphone portable..., d'évaluer l'interaction utilisateur-environnement de travail et d'agir en conséquence, par exemple, sur l'ergonomie du poste de travail de l'utilisateur.

## Revendications

1. Procédé de traitement de données représentatives d'une interaction entre un pilote (12) et le cockpit d'un avion (14), comportant les étapes suivantes :
- acquisition (E1) par un appareil oculométrique (10) de données oculométriques permettant, au cours d'un intervalle de temps donné, de suivre le regard du pilote qui parcourt un ou plusieurs instruments de bord du cockpit, lors de l'interaction du pilote avec un ou plusieurs éléments d'interface du cockpit d'avion, ces données oculométriques étant représentatives de la position du regard du pilote (26) parcourant différents éléments visuels d'un même instrument de bord (14), l'acquisition de ces données permettant d'identifier les éléments visuels de la scène visuelle ayant retenu l'attention du pilote et qui correspondent à des évènements,
- traitement (E3) de données ainsi acquises, **caractérisé en ce que** le traitement de données effectué en vue de déterminer au moins un motif visuel comprend une recherche, parmi les événements, d'au moins un motif visuel (124, 126 ; 142, 144) qui se répète plusieurs fois au cours de l'intervalle de temps, ledit au moins un motif visuel étant une séquence d'évènements (01-05 ; 01-03) qui apparaissent successivement au cours de l'intervalle de temps, le procédé comportant une étape préalable (E2) de traitement statistique des données acquises et l'étape de traitement (E3) des données en vue de déterminer au moins un motif visuel est effectuée en fonction du résultat de l'étape de traitement statistique.

2. Procédé selon la revendication 1, **caractérisé en ce qu'**au moins un des évènements dudit au moins un motif visuel satisfait à au moins un critère prédéterminé.

3. Procédé selon la revendication 1, **caractérisé en ce que** l'étape (E2) de traitement statistique des données acquises fournit le nombre d'occurrences d'au moins certains des évènements ou éléments visuels regardés par le pilote au cours de l'intervalle de temps.

4. Procédé selon la revendication 3, **caractérisé en ce que** le traitement de données en vue de déterminer au moins un motif visuel est effectué à partir des éléments visuels ou évènements dont les nombres d'occurrences sont les plus élevés.

5. Procédé selon l'une des revendications 1 à 4, **caractérisé en ce que** l'étape (E1) d'acquisition de données fournit des données sur le comportement visuel du pilote associé à au moins certains des évènements ou éléments visuels regardés par le pilote au cours de l'intervalle de temps.

6. Procédé selon l'une des revendications 1 à 5, **caractérisé en ce que** l'étape (E1) d'acquisition des données est effectuée dans le cadre d'un scénario lié au déroulement d'une procédure donnée d'utilisation de l'environnement de travail du pilote.

7. Système de traitement de données représentatives d'une interaction entre un pilote (12) et le cockpit d'un avion (14), comportant :
- un appareil (10) d'acquisition de données oculométriques, au cours d'un intervalle de temps donné, configuré pour suivre le regard du pilote qui parcourt un ou plusieurs instruments de bord du cockpit, lors de l'interaction du pilote avec un ou plusieurs éléments d'interface du cockpit d'avion, ces données oculométriques étant représentatives de la position du regard du pilote (26) parcourant différents éléments visuels d'un même instrument de bord (14), l'acquisition de ces données permettant d'identifier les éléments visuels de la scène visuelle ayant retenu l'attention du pilote et qui correspondent à des évènements,
- des moyens (17) de traitement de données ainsi acquises, **caractérisé en ce que** les moyens de traitement sont configurés pour effectuer un traitement statistique préalable des données acquises, lesdits moyens de traitement de données étant configurés pour déterminer au moins un motif visuel en fonction du résultat du traitement statistique en recherchant, parmi les évènements préalablement traités de façon statistique, au moins un motif visuel (124, 126 ; 142, 144) qui se répète plusieurs fois au cours de l'intervalle de temps, ledit au moins un motif visuel étant une séquence d'évènements (01-05 ; 01-03) qui apparaissent successivement au cours de l'intervalle de temps.

## Claims

1. A method for processing data representing an interaction between a pilot (12) and the cockpit of an aircraft (14), comprising the following steps:
- acquisition (E1) by an oculometric apparatus (10) of oculometric data enabling the tracking, during a given period of time, of the pilot's gaze which passes over one or more on-board cockpit instruments, during the interaction of the pilot with one or more interface elements of the aircraft cockpit, said oculometric data representing the position of the gaze of the pilot (26) passing over different visual elements of the same on-board instrument (14), the acquisition of said data enabling identification of the visual elements of the visual scene that caught the pilot's attention and which correspond to events,
- processing (E3) data so acquired, **characterized in that** the processing of data carried out in order to determine at least one visual pattern comprises searching, among the events, for at least one visual pattern (124, 126 ; 142, 144) which is repeated several times during the period of time, said at least one visual pattern being a sequence of events (01-05 ; 01-03) which appear successively during the period of time, the method comprising a prior step (E2) of statistical processing of the acquired data and the step of processing (E3) the data in order to determine at least one visual pattern is carried out according to the result of the statistical processing step.

2. A method according to claim 1, **characterized in that** at least one of the events of the said at least one visual pattern satisfies at least one predetermined criterion.

3. A method according to claim 1, **characterized in that** the step (E2) of statistical processing of the acquired data provides the number of occurrences of at least some of the visual elements or events gazed at by the pilot during the period of time.

4. A method according to claim 3, **characterized in that** the processing of data in order to determine at least one visual pattern is performed on the basis of the visual elements or events for which the number of occurrences is the highest.

5. A method according to one of claims 1 to 4, **characterized in that** the data acquisition step (E1) provides data on the visual behavior of the pilot associated with at least some of the events or visual elements gazed at by the pilot during the period of time.

6. A method according to one of claims 1 to 5, **characterized in that** the data acquisition step (E1) is performed in the context of a scenario related to the progress of a given procedure of use of the pilot's work environment.

7. A system for processing data representing an interaction between a pilot (12) and the cockpit of an aircraft (14), comprising:
- an apparatus (10) for acquisition of oculometric data configured for tracking, during a given period of time, the pilot's gaze which passes over one or more on-board instruments of the cockpit, during the interaction of the pilot with one or more interface elements of the aircraft cockpit, said oculometric data representing the position of the gaze of the pilot (26) passing over different visual elements of the same on-board instrument (14), the acquisition of said data enabling identification of the visual elements of the visual scene that caught the pilot's attention and which correspond to events,
- means (17) for processing data so acquired, **characterized in that** the processing means are configured for performing statistical processing of the acquired data in advance, said data processing means being configured for determining at least one visual pattern according to the result of the statistical processing by searching, among the events statistically processed in advance, for at least one visual pattern (124, 126 ; 142, 144) which repeats several times during the period of time, said at least one visual pattern being a sequence of events (01-05 ; 01-03) which appear successively during the period of time.

## Patentansprüche

1. Verfahren zum Verarbeiten von Daten, die repräsentativ sind für eine Interaktion zwischen einem Piloten (12) und dem Cockpit eines Flugzeugs (14), umfassend die nachfolgenden Schritte:
- Erfassen (E1) von okulometrischen Daten durch ein Blickerfassungsgerät (10), mit denen es möglich ist, im Laufe eines gegebenen Zeitintervalls während der Interaktion des Piloten mit einem oder mehreren Schnittstellenelementen des Flugzeugcockpits dem Blick des Piloten zu folgen, der ein oder mehrere Bordinstrumente des Cockpits abwandert, wobei diese okulometrischen Daten repräsentativ sind für die Stellung des Blicks des Piloten (26), der verschiedene visuelle Elemente eines gleichen Bordinstruments (14) abwandert, wobei es mit der Erfassung dieser Daten möglich ist, die visuellen Elemente der visuellen Szene zu identifizieren, welche die Aufmerksamkeit des Piloten auf sich gelenkt haben und welche Ereignissen entsprechen,
- Verarbeiten (E3) von so erfassten Daten,
**dadurch gekennzeichnet, dass** die Datenverarbeitung, die zum Ermitteln von zumindest einem visuellen Muster erfolgt, eine Suche nach zumindest einem visuellen Muster (124, 126; 142, 144) aus den Ereignissen umfasst, welches sich im Laufe des Zeitintervalls mehrere Male wiederholt, wobei das zumindest eine visuelle Muster eine Folge von Ereignissen (01-05; 01-03) ist, die im Laufe des Zeitintervalls aufeinanderfolgend vorkommen, wobei das Verfahren einen vorhergehenden Schritt (E2) zur statistischen Verarbeitung der erfassten Daten umfasst und der Verarbeitungsschritt (E3) zum Verarbeiten der Daten zwecks Ermittlung zumindest eines visuellen Musters in Abhängigkeit von dem Ergebnis des Schritts der statistischen Verarbeitung erfolgt.

2. Verfahren nach Anspruch 1,
**dadurch gekennzeichnet, dass** zumindest eines der Ereignisse des zumindest einen visuellen Musters zumindest einem vorbestimmten Kriterium entspricht.

3. Verfahren nach Anspruch 1,
**dadurch gekennzeichnet, dass** der Schritt (E2) zur statistischen Verarbeitung der erfassten Daten die Anzahl der Vorkommnisse von zumindest bestimmten Ereignissen oder visuellen Elementen liefert, die im Laufe des Zeitintervalls von dem Piloten betrachtet werden.

4. Verfahren nach Anspruch 3,
**dadurch gekennzeichnet, dass** die Verarbeitung der Daten zum Ermitteln zumindest eines visuellen Musters ausgehend von den visuellen Elementen oder Ereignissen erfolgt, die am häufigsten vorkommen.

5. Verfahren nach einem der Ansprüche 1 bis 4,
**dadurch gekennzeichnet, dass** der Schritt (E1) der Datenerfassung Daten über das visuelle Verhalten des Piloten liefert, dem zumindest bestimmte Ereignisse oder visuelle Elemente zugeordnet sind, die im Laufe des Zeitintervalls von dem Piloten betrachtet werden.

6. Verfahren nach einem der Ansprüche 1 bis 5,
**dadurch gekennzeichnet, dass** der Schritt (E1) der Datenerfassung im Rahmen eines Szenarios erfolgt, das mit dem Ablauf eines gegebenen Vorgangs der Benutzung der Arbeitsumgebung des Piloten zusammenhängt.

7. System zum Verarbeiten von Daten, die repräsentativ sind für eine Interaktion zwischen einem Piloten (12) und dem Cockpit eines Flugzeugs (14), enthaltend:
- ein Gerät (10) zum Erfassen von okulometrischen Daten, das dazu ausgebildet ist, im Laufe eines gegebenen Zeitintervalls während der Interaktion des Piloten mit einem oder mehreren Schnittstellenelementen des Flugzeugcockpits dem Blick des Piloten zu folgen, der ein oder mehrere Bordinstrumente des Cockpits abwandert, wobei diese okulometrischen Daten repräsentativ sind für die Lage des Blicks des Piloten (26), der verschiedene visuelle Elemente eines gleichen Bordinstruments (14) abwandert, wobei es die Erfassung dieser Daten ermöglicht, die visuellen Elemente der visuellen Szene zu identifizieren, welche die Aufmerksamkeit des Piloten auf sich gelenkt haben und welche Ereignissen entsprechen,
- Mittel (17) zum Verarbeiten von so erfassten Daten,
**dadurch gekennzeichnet, dass** die Verarbeitungsmittel dazu ausgebildet sind, eine vorhergehende statistische Verarbeitung der erfassten Daten durchzuführen, wobei die Datenverarbeitungsmittel dazu ausgebildet sind, zumindest ein visuelles Muster in Abhängigkeit von dem Ergebnis der statistischen Verarbeitung zu ermitteln, indem unter den vorher statistisch verarbeiteten Ereignissen nach zumindest einem visuellen Muster (124, 126; 142, 144) gesucht wird, das sich im Laufe des Zeitintervalls mehrere Male wiederholt, wobei das zumindest eine visuelle Muster eine Folge von Ereignissen (01-05; 01-03) ist, die im Laufe des Zeitintervalls aufeinanderfolgend vorkommen.
